(19) Europäisches Patentamt / European Patent Office / Office européen des brevets

(11) **EP 2 557 857 A1**

(12) **EUROPEAN PATENT APPLICATION**
published in accordance with Art. 153(4) EPC

(43) Date of publication:
**13.02.2013 Bulletin 2013/07**

(21) Application number: **11765608.2**

(22) Date of filing: **30.03.2011**

(51) Int Cl.:
*H04W 48/16* (2009.01)  *H04W 16/26* (2009.01)
*H04W 24/10* (2009.01)  *H04W 48/20* (2009.01)

(86) International application number:
**PCT/JP2011/057962**

(87) International publication number:
**WO 2011/125708 (13.10.2011 Gazette 2011/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2010 JP 2010087277**

(71) Applicant: **NTT DOCOMO, INC.**
**Chiyoda-ku**
**Tokyo**
**100-6150 (JP)**

(72) Inventors:
• **NAGATA, Satoshi**
**Tokyo 100-6150 (JP)**

• **JATURONG, Sangiamwong**
**Tokyo 100-6150 (JP)**
• **ABE, Tetsushi**
**Tokyo 100-6150 (JP)**
• **MIKI, Nobuhiko**
**Tokyo 100-6150 (JP)**
• **MORIOKA, Yasufumi**
**Tokyo 100-6150 (JP)**

(74) Representative: **HOFFMANN EITLE**
**Patent- und Rechtsanwälte**
**Arabellastrasse 4**
**81925 München (DE)**

(54) **WIRELESS BASE STATION DEVICE, MOBILE TERMINAL DEVICE, AND CELL SELECTION METHOD**

(57) To provide a cell selecting method in which an optimal cell can be selected in the case of relay transmission. The cell selecting method includes: in a radio base station apparatus, determining a specified sub-frame including data for measuring reception quality in a mobile terminal device; and in a mobile terminal device, measuring first reception quality using a reference signal of the specified sub-frame transmitted from the radio base station apparatus and second reception quality using a reference signal of the specified sub-frame transmitted from the radio base station apparatus through a radio relay station apparatus, and transmitting the first reception quality and the second reception quality to the radio base station apparatus; and in the radio base station apparatus, selecting a cell to which the mobile terminal device is connected using the first reception quality and the second reception quality, and transmitting information on the selected cell to the mobile terminal device.

FIG. 6

EP 2 557 857 A1

## Description

Technical field

The present invention relates to a radio base station apparatus, a mobile terminal device, and a cell selecting method each using relay transmission technology in a Long Term Evolution-Advanced (LTE-A) system.

Background art

In 3rd Generation Partnership Project (3GPP), standardization of LTE-Advanced (LTE-A) has been advanced as a fourth generation mobile communication system for achieving an additional high speed and high-capacity communication from Long Term Evolution (LTE) which is a developed standard of third generation mobile communication system. LTE-A has addressed an important problem for a cell end user to improve in a throughput, in addition to achieving of such a high speed and high-capacity communication, and relay technology for relaying a radio transmission between a radio base station apparatus and a mobile terminal device has been studied as a way for solving such a problem. It is expected that it can also enlarge coverage efficiently by using the relay, even at a location where securing of a wire backhaul link is difficult.

In the relay technology, there are a layer 1 relay, a layer 2 relay, and a layer 3 relay. The layer 1 relay is relay technology called a booster or a repeater, and is Amplifier and Forward (AF) type relay technology for performing power amplification of a downlink received RF signal from a radio base station apparatus and transmitting the amplified downlink received RF signal to a mobile terminal device. An uplink received RF signal from a mobile terminal device is also subjected to the power amplification similarly to be transmitted to a radio base station. The Layer 2 relay is Decode and Forward (DF) type relay technology for coding and modulating the downlink received RF signal from the radio base station apparatus again after demodulating and decoding, and transmitting the coded and modulated downlink received RF signal to the mobile terminal device. The layer 3 relay is relay technology for reproducing user data after decoding the downlink received RF signal from the radio base station apparatus, in addition to the demodulating process and the decoding process, and then executing processes for transmitting the user data over the radio again (e.g., a cipher process, a dividing/coupling process of the user data, etc.), and transmitting the coded/modulated user data to the mobile terminal device. Nowadays, in 3GPP, standardization with regard to the layer 3 relay technology has been advanced from viewpoints of improving in receiving characteristics due to noise elimination, reviewing of standard specification, and simplicity of implementation.

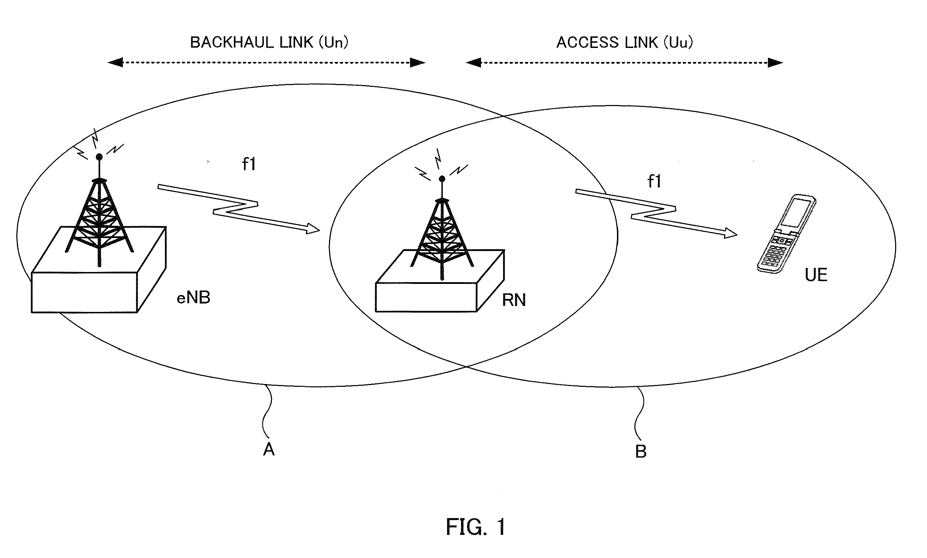

Fig. 1 is a diagram showing a brief overview of radio relay technology using the layer 3 relay. The radio relay station apparatus (Relay Node (RN) ) of layer 3 relay has a specific cell ID (Physical Cell ID (PCI)) different from that of the radio base station apparatus (evolved Node B (eNB)), in addition to executing a reproducing process, a modulation and demodulation process, and a coding and decoding process of user data. Accordingly, the mobile terminal device (User Equipment (UE)) recognizes a cell B provided by the radio relay station apparatus as a cell different from a cell A provided by the radio base station apparatus. Moreover, since a control signal of physical layers (e.g., Channel Quality Indicator (CQI) and Hybrid Automatic Repeat reQuest (HARQ)) is terminated at the radio relay station apparatus, the radio relay station apparatus is recognized as a radio base station apparatus, as seen from the mobile terminal device. Accordingly, even the mobile terminal device having only a function of LTE can be connected to the radio relay station apparatus.

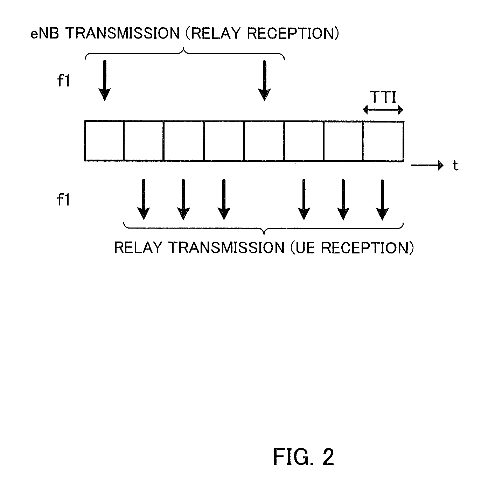

Moreover, it is assumed that a backhaul link (Un) between the radio base station apparatus and the radio relay station apparatus and an access link (Uu) between the radio relay station apparatus and the mobile terminal device are operated on a different frequency or the same frequency. In the case of the latter, if the radio relay station apparatus executes a transmission process and a reception process simultaneously, a transmitted signal is wrapped around a receiver of the radio relay station apparatus, unless sufficient isolation is securable in a transmitting and receiving circuit, and thereby causing interference. Accordingly, in the case of operation on the same frequency (f1) as shown in Fig. 2, it is necessary to perform Time Division Multiplexing (TDM) of radio resources of the backhaul link and the access link (eNB transmission and relay transmission), and control so that the transmission process and the reception process are not simultaneously executed in the radio relay station apparatus (Refer to Non Patent Literature 1.). Accordingly, the radio relay station apparatus cannot transmit a downlink signal to the mobile terminal device, during reception of a downlink signal from the radio base station apparatus, in the downlink, for example.

Citation list

Non-patent literature

**Non Patent Literature 1:** 3GPP, TR36.814

Summary of the invention

Technical problem

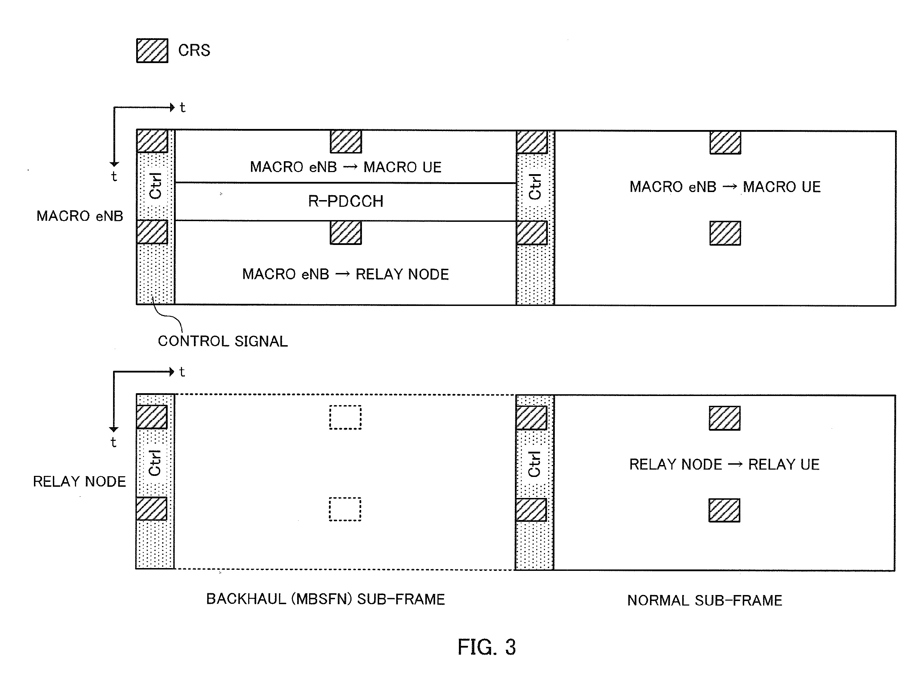

In the radio relay technology by using such a layer 3 relay, a sub-frame constitution of the downlink is shown in Fig. 3. In Fig. 3, there are a backhaul (MBMS over a Single Frequency Network (MBSFN)) sub-frame for providing a simultaneous distribution service (Multimedia Broadcast Multicast Service (MBMS) ) of broadcast type contents distributed to plenty of user in a single frequency network, and a normal sub-frame.

In the backhaul link from a macro eNB (radio base station apparatus) to a relay node (radio relay station apparatus), data, a control signal, and a reference signal (Common Reference Signal (CRS)) are transmitted by the backhaul sub-frame. In this case, the transmitted data includes data from the macro eNB to a macro UE (mobile terminal device under the command of the eNB) , data from the macro eNB to the relay node, and a control signal for relay (Relay-Physical Downlink Control CHannel (R-PDCCH) ). On the other hand, in an access link in the same time, the control signal and the reference signal (CRS) are transmitted by the backhaul sub-frame, but data is not transmitted as mentioned above.

In the backhaul link, data, a control signal, and a reference signal (CRS) are transmitted from the macro eNB to the macro UE by the normal sub-frame. In the access link, data, a control signal, and a reference signal (CRS) are transmitted from the relay node to the relay UE (mobile terminal device under the controls of the relay node) by a normal sub-frame.

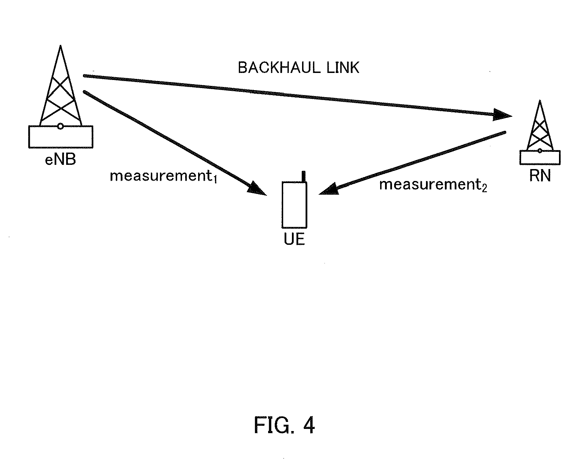

In the relay cell of such a configuration, the mobile terminal device will need to select whether to connect with the radio base station apparatus or to connect with the radio relay station apparatus. In this case, a reception quality measured value (measurement (Reference Signal Received Power (RSRP), Reference Signal Received Quality (RSRQ) , etc.)) obtained using reference signal (e.g., CRS) is used as an already-existing parameter for the cell selection. More specifically, as shown in Fig. 4, the mobile terminal device (user Equipment (UE)) compares a measured value (measurement$_1$) obtained using CRS from the radio base station apparatus (eNB) with a measured value (measurement$_2$) obtained using CRS from the radio relay station apparatus (RN) to select the cell so as to connect with an apparatus of high reception quality.

However, as shown in Fig. 3, there is data in the backhaul sub-frame of the backhaul link, but there is no data in the backhaul sub-frame of the access link. Accordingly, a reception quality measured value measured by the backhaul sub-frame of the access link will be largely different as compared with a reception quality measured value in an actual Physical Downlink Shared CHannel (PDSCH) area. Accordingly, if selecting the cell using such a reception quality measured value, an optimal cell cannot be selected (first problem).

Moreover, as shown in Fig. 4, the measured value (measurement$_1$) obtained using CRS from the radio base station apparatus (eNB) is one-hop data transmission from the radio base station apparatus to the mobile terminal device. On the other hand, the measured value (measurement$_2$) obtained using CRS from the radio relay station apparatus (RN) is two-hop data transmission from the radio base station apparatus to the radio relay station apparatus and from the radio relay station apparatus to the mobile terminal device. Accordingly, if the measured value (measurement$_2$) is used when selecting the cell, only a propagation environment from the radio relay station apparatus to the mobile terminal device will be taken into consideration, but a throughput restriction accompanied by a relay of data using the backhaul link will not be reflected. Accordingly, if selecting the cell using such a reception quality measured value, an optimal cell cannot be selected (second problem).

The present invention has been achieved in consideration of such points, and an object thereof is to provide a radio base station apparatus, a mobile terminal device, and a cell selecting method in each of which an optimal cell can be selected in the case of relay transmission.

Solution to problem

A cell selecting method according to the present invention is structured such that there are provided: in a radio base station apparatus, determining a specified sub-frame including data for measuring reception quality in a mobile terminal device, and transmitting information on the specified sub-frame; in the mobile terminal device, receiving the information on the specified sub-frame, measuring first reception quality using a reference signal of the specified sub-frame transmitted from the radio base station apparatus, while measuring second reception quality using a reference signal of the specified sub-frame transmitted from the radio base station apparatus through a radio relay station apparatus, and transmitting the measured value of the first reception quality and the measured value of the second reception quality to the radio base station apparatus; and in the radio base station apparatus, selecting a cell to which the mobile terminal device is connected, using the measured value of the first reception quality and the measured value of the second reception quality, and transmitting information on the selected cell to the mobile terminal device.

Also, a cell selecting method according to the present invention is structured such that there are provided: in a mobile terminal device, measuring first reception quality using a reference signal transmitted from a radio base station apparatus to the mobile terminal device, while measuring second reception quality using a reference signal transmitted from the radio base station apparatus to the mobile terminal device through a radio relay station apparatus, and transmitting the measured value of the first reception quality and the measured value of the second reception quality to the radio base station apparatus; and in the radio base station apparatus, determining a cell to which the mobile terminal device is connected, by adding an offset value to the second reception quality measured value and comparing the second reception quality measured value with the first reception quality measured value, and transmitting information on the determined cell to the mobile terminal device.

Yet also, a cell selecting method according to the present invention is structured such that there are provided: in a radio base station apparatus, determining an offset value of a second reception quality measured value measured using a reference signal transmitted from the radio base station apparatus to a mobile terminal device through a radio relay station apparatus with respect to a first reception quality measured value measured using a reference signal transmitted from the radio base station apparatus to the mobile terminal device, and transmitting information on the determined offset value to the mobile terminal device; and in the mobile terminal device, measuring the first reception quality while measuring the second reception quality, and selecting a cell to which the mobile terminal device is connected, using the measured value of the first reception quality, the measured value of the second reception quality, and information on the offset value.

Technical advantage of the invention

According to the cell selecting method of the present invention, an optimal cell can be selected in the case of relay transmission, since the cell is selected using the reception quality measured value measured with the specified sub-frame including data, or the cell is selected using the offset value of the second reception quality measured value measured using a reference signal transmitted from the radio base station apparatus to the mobile terminal device through the radio relay station apparatus with respect to the first reception quality measured value measured using a reference signal transmitted from the radio base station apparatus to the mobile terminal device.

Brief description of the drawings

Fig. 1 is a diagram for explaining relay transmission technology;
Fig. 2 is a diagram for explaining radio resources of a backhaul link and an access link;
Fig. 3 is a diagram for explaining a sub-frame constitution of the backhaul link and the access link;
Fig. 4 is a diagram for explaining a data transmission from a radio base station apparatus to a mobile terminal device;
Fig. 5 is a block diagram showing a schematic structure of a radio base station apparatus according to an embodiment of the present invention;
Fig. 6 is a block diagram showing a structure of a baseband signal processing unit in the radio base station apparatus shown in Fig. 5;
Fig. 7 is a block diagram showing a schematic structure of a mobile terminal device according to an embodiment of the present invention;
Fig. 8 is a block diagram showing a structure of a baseband signal processing unit in the mobile terminal device shown in Fig. 7;
Fig. 9 is a block diagram showing a structure of a baseband signal processing unit according to Embodiment 2 in the radio base station apparatus shown in Fig. 5;
Fig. 10 is a block diagram showing a structure of a baseband signal processing unit according to Embodiments 3 and 4 in the radio base station apparatus shown in Fig. 5;
Fig. 11 is a block diagram showing a structure of a baseband signal processing unit according to Embodiments 3 and 4 in the mobile terminal device shown in Fig. 7;
Fig. 12 is a diagram showing a relation between reception quality and a throughput;
Fig. 13 is a block diagram showing a structure of a baseband signal processing unit according to Embodiment 5 in the radio base station apparatus shown in Fig. 5; and
Fig. 14 is a block diagram showing a structure of a baseband signal processing unit according to Embodiment 5 in the mobile terminal device shown in Fig. 7.

Description of embodiments

Hereinafter, embodiments of the present invention will now be described in detail with reference to the accompanying drawings. Note that, in the following embodiments, all processes executed in a radio base station apparatus can be executed also in a radio relay station apparatus.

**(Embodiment 1)**

In this embodiment, the case where reception quality is measured using a specified sub-frame including data will now be explained. As used herein, as the "specified sub-frame including data", a normal sub-frame can be listed, for example. Also, as used herein, RSRP, RSRQ, etc. can be listed as the reception quality.

A cell selecting method according to the present embodiment includes: in a radio base station apparatus, determining a specified sub-frame including data for measuring reception quality in a mobile terminal device, and transmitting information on the specified sub-frame; in a mobile terminal device, measuring first reception quality using a reference signal of the specified sub-frame transmitted from the radio base station apparatus, while measuring second reception quality using a reference signal of the specified sub-frame transmitted from the radio base station apparatus through a radio relay station apparatus, and transmitting the measured value of the first reception quality and the measured value of the second reception quality to the radio base station apparatus; and in the radio base station apparatus, selecting a cell to which the mobile terminal device is connected using the measured value of the first reception quality and the measured value of the second reception quality, and transmitting information on the selected cell to the mobile terminal device. As a consequence, the mobile terminal device is connected to the radio base station apparatus or the radio relay station apparatus, in the selected cell.

In this case, the radio base station apparatus (or the radio relay station apparatus) notifies information on the specified sub-frame for measuring the reception quality to the mobile terminal device using Higher-layer signaling (e.g., Radio Resource Control (RRC)).

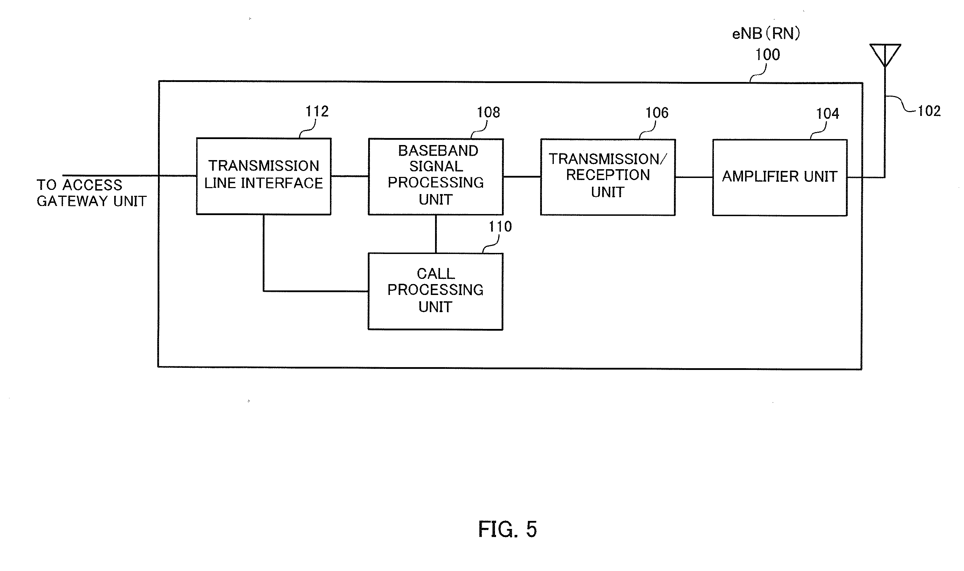

Fig. 5 is a block diagram showing a schematic structure of a radio base station apparatus according to an embodiment of the present invention. The radio base station apparatus 100 shown in Fig. 5 is mainly composed of an antenna 102, an amplifier unit 104, a transmission/reception unit 106, a baseband signal processing unit 108, a call processing unit 110, and a transmission line interface 112.

In the radio base station apparatus 100 having such a structure, with regard to uplink data, a radio frequency signal received with the antenna 102 is amplified by the amplifier unit 104 so that received electric power is corrected to certain electric power under Auto Gain Control (AGC). The amplified radio frequency signal is frequency-converted in the transmission/reception unit 106 to a baseband signal. This baseband signal is subjected to predetermined processes (e.g., an error correction, decoding, etc.) in the baseband signal processing unit 108, and then is transmitted to an access gateway unit (not illustrated) through a transmission line interface 112. The access gateway unit is connected to a core network and manages each mobile terminal device. With regard to the uplink, reception SINR and interference level of the radio frequency signal received by the radio base station apparatus 100 are measured based on an uplink baseband signal.

The call processing unit 110 transmits and receives a call processing control signal to/from the radio control station being an upper device, and manages a state and allocates resources of the radio base station apparatus 100. Note that the process in the above-mentioned layer 1 processing unit 1081 and MAC processing unit 1082 is executed based on a communication condition between the radio base station apparatus 100 and the mobile station 200 set in the call processing unit 110.

Downlink data is input into the baseband signal processing unit 108 through the transmission line interface 112 from an upper device. In the baseband signal processing unit 108, the data input therein is subjected to processes of retransmission control, scheduling, selection of a transmission format, channel coding, etc., and then is transmitted to the transmission/reception unit 106. In the transmission/reception unit 106, the baseband signal output from the baseband signal processing unit 108 is frequency-converted to a radio frequency signal. Subsequently, the frequency-converted signal is amplified by the amplifier unit 104, and then is transmitted from the antenna 102.

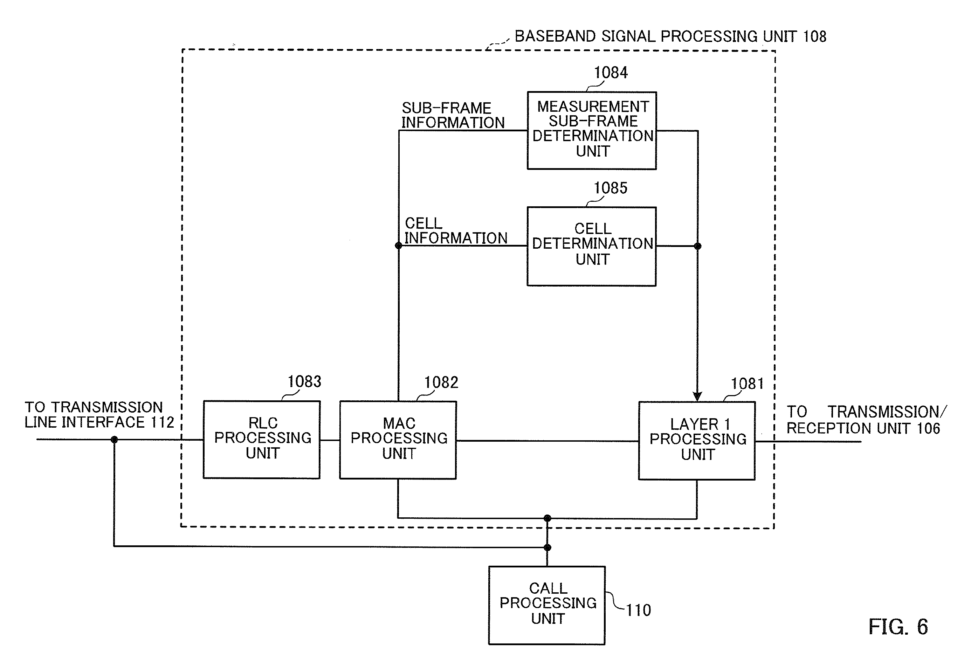

Fig. 6 is a block diagram showing a structure of the baseband signal processing unit in the radio base station apparatus shown in Fig. 5. The baseband signal processing unit 108 is mainly composed of a layer 1 processing unit 1081, a Medium Access Control (MAC) processing unit 1082, a Radio Link Control (RLC) processing unit 1083, a measurement sub-frame determination unit 1084, and a cell determination unit 1085.

The layer 1 processing unit 1081 mainly executes process with regard to a physical layer. The layer 1 processing unit 1081 executes processes of channel decryption, a Discrete Fourier Transform (DFT), frequency demapping, an Inverse Fast Fourier Transform (IFFT), data demodulation, etc. to the signal received through the uplink, for example. The layer 1 processing unit 1081 executes processes of channel coding, data modulation, frequency mapping, an inverse fast Fourier transform (IFFT), etc. to a signal to be transmitted through the downlink.

The MAC processing unit 1082 executes retransmission control process in the MAC layer, scheduling process with respect to the uplink/downlink, selection process of a transmission format of PUSCH/PDSCH, selection process of resource blocks of PUSCH/PDSCH, etc. with respect to the signal received through the uplink.

With respect to a packet received through the uplink/a packet to be transmitted through the downlink, the RLC processing unit 1083 executes dividing process of the packet, coupling process of the packet, retransmission control process in the RLC layer, etc.

The measurement sub-frame determination unit 1084 determines a specified sub-frame for measuring the reception quality in the mobile terminal device. This specified sub-frame is a normal sub-frame including data. The measurement sub-frame determination unit 1084 notifies information on this specified sub-frame (sub-frame information) to the mobile terminal device using Higher-layer signaling, for example.

The cell determination unit 1085 selects a cell to which the mobile terminal device is connected using: a measured value of a first reception quality measured in the mobile terminal device using a reference signal of the specified sub-frame transmitted from the radio base station apparatus; and a measured value of a second reception quality measured in the mobile terminal device using a reference signal of the specified sub-frame transmitted from the radio base station apparatus through the radio relay station apparatus. More specification, the first reception quality measured value is compared with the second reception quality measured value in order to select a cell having satisfactory reception quality. The cell determination unit 1085 notifies information on the selected cell (cell information) to the mobile terminal device using Higher-layer signaling, for example.

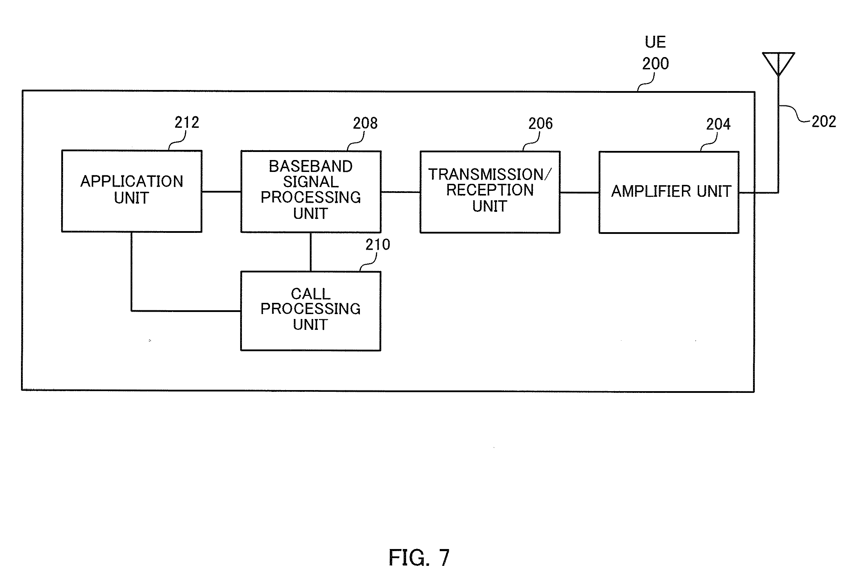

Fig. 7 is a block diagram showing a schematic structure of a mobile terminal device according to an embodiment of the present invention. The mobile terminal device 200 shown in Fig. 7 is mainly composed of an antenna 202, an amplifier unit 204, a transmission/reception unit 206, a baseband signal processing unit 208, a call processing unit 210, and an application unit 212.

In the mobile terminal device 200 having such a structure, with regard to downlink data, a radio frequency signal received with the antenna 202 is amplified by the amplifier unit 204 so that received electric power is corrected to certain electric power under AGC. The amplified radio frequency signal is frequency-converted in the transmission/reception unit 206 to a baseband signal. This baseband signal is transmitted to both of the call processing unit 210 and the application unit 212, after predetermined processes (e.g., an error correction, decoding, etc.) are subjected to the baseband signal in the baseband signal processing unit 208. The call processing unit 210 executes management of communication with the radio base station apparatus 100, etc., and the application unit 212 executes process with regard to a layer higher than the physical layer or MAC layer.

Uplink data is input into the baseband signal processing unit 208 from the application unit 212. In the baseband signal processing unit 208, the data input therein is subjected to processes of retransmission control, scheduling, selection of a transmission format, channel coding, etc., and then is transmitted to the transmission/reception unit 206. In the transmission/reception unit 206, the baseband signal output from the baseband signal processing unit 208 is frequency-converted to a radio frequency signal. Subsequently, the frequency-converted signal is amplified by the amplifier unit 204, and then is transmitted from the antenna 202.

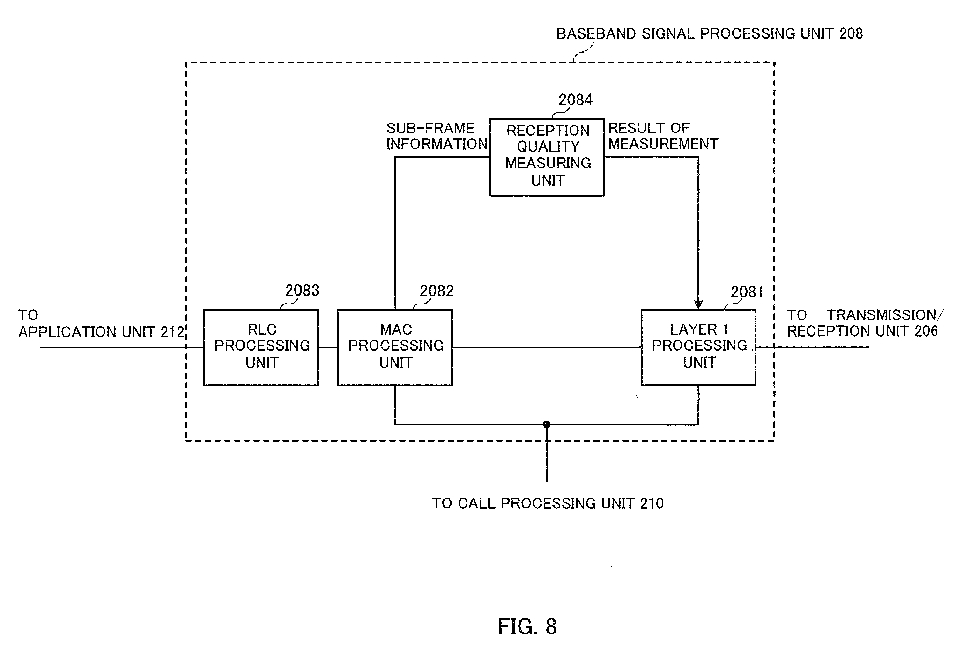

Fig. 8 is a block diagram showing a structure of a baseband signal processing unit in the mobile terminal device shown in Fig. 7. The baseband signal processing unit 208 is mainly composed of a layer 1 processing unit 2081, a MAC processing unit 2082, an RLC processing unit 2083, and a reception quality measuring unit 2084.

The layer 1 processing unit 2081 mainly executes process with regard to a physical layer. The layer 1 processing unit 2081 executes processes of channel decryption, a discrete Fourier transform, frequency demapping, an inverse fast Fourier transform, data demodulation, etc. to the signal received through the downlink, for example. The layer 1 processing unit 2081 executes processes of channel coding, data modulation, frequency mapping, an inverse fast Fourier transform (IFFT), etc. to a signal to be transmitted through the uplink.

The MAC processing unit 2082 executes retransmission control (HARQ) process in the MAC layer, analyzing of downlink scheduling information (specifying of a transmission format of PDSCH, specifying of resource blocks of PDSCH), etc. with respect to the signal received through the downlink. The MAC processing unit 2082 also executes MAC retransmission control process, analyzing of uplink scheduling information (specifying of a transmission format of PUSCH, specifying of resource blocks of PUTSCH), etc. with respect to the signal to be transmitted through the uplink.

With respect to a packet received through the downlink/a packet to be transmitted through the uplink, the RLC processing unit 2083 executes dividing process of the packet, coupling process of the packet, retransmission control process in the RLC layer, etc.

The reception quality measuring unit 2084 measures a first reception quality using a reference signal directly transmitted from the radio base station apparatus, while measures a second reception quality using a reference signal transmitted from the radio base station apparatus through the radio relay station apparatus. The reception quality measuring unit 2084 measures the reception quality using a specified sub-frame in accordance with sub-frame information (information on the sub-frame to be measured) notified from the radio base station apparatus using Higher-layer signaling. The reception quality measuring unit 2084 transmits the measured value of the first reception quality, and the measured value of the second reception quality to the transmission/reception unit 206. The measured value of the first reception quality and the measured value of the second reception quality (result of the measurement) are transmitted to the radio base station apparatus using the Higher-layer signaling (or physical layer signaling) etc.

In such a structure, the measurement sub-frame determination unit 1084 of the radio base station apparatus determines the specified sub-frame including data for measuring the reception quality in the mobile terminal device, and then transmits this determined sub-frame information. Subsequently, the reception quality measuring unit 2084 of the mobile terminal device measures the first reception quality using the reference signal of the specified sub-frame transmitted from the radio base station apparatus, while measures the second reception quality using the reference signal of the specified sub-frame transmitted from the radio base station apparatus through the radio relay station apparatus, and then transmits the measured value of the first reception quality and the measured value of the second reception quality to the radio base station apparatus. Subsequently, the cell determination unit 1085 of the radio base station apparatus selects a cell to which the mobile terminal device is connected using the measured value of the first reception quality and the measured value of the second reception quality, and transmits information on the selected cell (cell information) to the mobile terminal device. As a consequence, the mobile terminal device is connected to the radio base station apparatus or the radio relay station apparatus, in the selected cell.

Thus, in the present embodiment, since the reception quality is measured using the sub-frame in which data exists, the measured reception quality becomes approximately equal to an actual reception quality in the physical downlink shared channel area. Accordingly, optimal cell can be selected by executing the cell selection using such a reception quality measured value.

**(Embodiment 2)**

In the present embodiment, there will now be explained the case where an offset value is added to the second reception quality measured value obtained using the reference signal received through the radio relay station apparatus. In particular in the present embodiment, there will now be explained the case where an offset value is added to the second reception quality measured value obtained using the reference signal received through the radio relay station apparatus, compares the second reception quality measured value with the first reception quality measured value obtained using the reference signal received from the radio base station apparatus, and determines a cell to which the mobile terminal device is connected, in the radio base station apparatus (radio relay station apparatus). As used herein, RSRP, RSRQ, etc. can be listed as the reception quality.

The radio base station apparatus (or the radio relay station apparatus) notifies the information on the cell to which the mobile terminal device is connected (cell information) to the mobile terminal device using Higher-layer signaling (e.g., Radio Resource Control (RRC)).

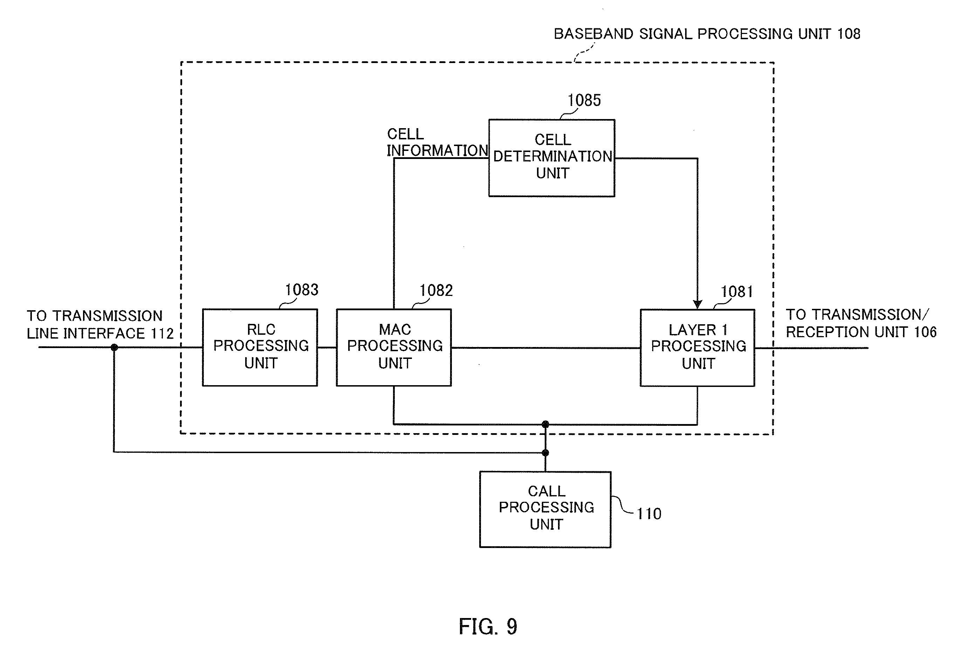

Fig. 9 is a block diagram showing a structure of a baseband signal processing unit according to Embodiment 2 in the radio base station apparatus shown in Fig. 5. The baseband signal processing unit 108 is mainly composed of a layer 1 processing unit 1081, a MAC processing unit 1082, an RLC processing unit 1083, and a cell determination unit 1085. Note that, in Fig. 9, the similar reference numeral as Fig. 6 is attached to the similar part as Fig. 6, and the detailed explanation thereof will be omitted.

In the mobile terminal device, the cell determination unit 1085 selects a cell to which the mobile terminal device is connected using the measured value of the first reception quality measured using the reference signal transmitted from the radio base station apparatus, and the measured value of the second reception quality measured using the reference signal transmitted from the radio base station apparatus through the radio relay station apparatus. At this time, an offset value (bias) is added to the measured value of the second reception quality. This offset value can be suitably set in consideration of throughput restriction etc. accompanied by a relay of data using the backhaul link. Then, the first reception quality measured value is compared with the second reception quality measured value to which the offset value is added so as to select a satisfactory reception quality cell. For example, the cell determination unit 1085 selects a cell in accordance with the following expression (1):

$$\text{Serving Cell} = \arg\max_i (RSRQ_i \, [dB] + Bias_i \, [dB]) \tag{1}$$

where $Bias_i$ is 0dB if $cell_i$ is a macro cell, and $Bias_i$ is $\Delta$dB if $cell_i$ is a relay cell.

Subsequently, the cell determination unit 1085 notifies information on the determined (selected) cell (cell information) to the mobile terminal device using Higher-layer signaling, for example.

The structure of the baseband signal processing unit according to Embodiment 2 in the mobile terminal device is the same as that shown in Fig. 8.

In such a structure, the reception quality measuring unit 2084 of the mobile terminal device measures the first reception quality using the reference signal transmitted from the radio base station apparatus to the mobile terminal device, while measures the second reception quality using the reference signal transmitted from the radio base station apparatus to the mobile terminal device through the radio relay station apparatus. Then, the mobile terminal device transmits the measured value of the first reception quality and the measured value of the second reception quality to the radio base station apparatus. Subsequently, the cell determination unit 1085 of the radio base station apparatus adds the offset value to the measured value of the second reception quality, compares the second reception quality measured value with the first reception quality measured value, selects a cell to which the mobile terminal device is connected, and transmits the information on the selected cell (cell information) to the mobile terminal device. As a consequence, the mobile terminal device is connected to the radio base station apparatus or the radio relay station apparatus, in the selected cell.

Thus, in the present embodiment, since the offset value in which the throughput restriction accompanied by the relay of data using the backhaul link is reflected is added to the second reception quality measured value, the first reception quality measured value can be impartially compared with the second reception quality measured value even if the hop numbers of data transmission are different. Accordingly, optimal cell can be selected by executing the cell selection using such a reception quality measured value.

**(Embodiment 3)**

In the present embodiment, there will now be explained the case where an offset value is added to the second reception quality measured value obtained using the reference signal received through the radio relay station apparatus. In particular in the present embodiment, there will now be explained the case where the radio base station apparatus (the radio relay station apparatus) notifies the offset value to be added to the second reception quality measured value obtained using the reference signal received through the radio relay station apparatus to the mobile terminal device, and then the mobile terminal device compares the first reception quality measured value with the second reception quality measured value to which the offset value is added to determine the cell to which the mobile terminal device is connected. As used herein, RSRP, RSRQ, etc. can be listed as the reception quality.

In the present embodiment, the radio base station apparatus (the radio relay station apparatus) notifies the offset value ($\Delta$) to the mobile terminal device using Higher-layer signaling (or physical layer signaling) (e.g., RRC). Moreover, in the present embodiment, the radio base station apparatus (the radio relay station apparatus) notifies the offset value ($\Delta$) specific to a cell (cell-specific) to the mobile terminal device. More specifically, the same offset value ($\Delta$) is notified to all the mobile terminal devices under the cell.

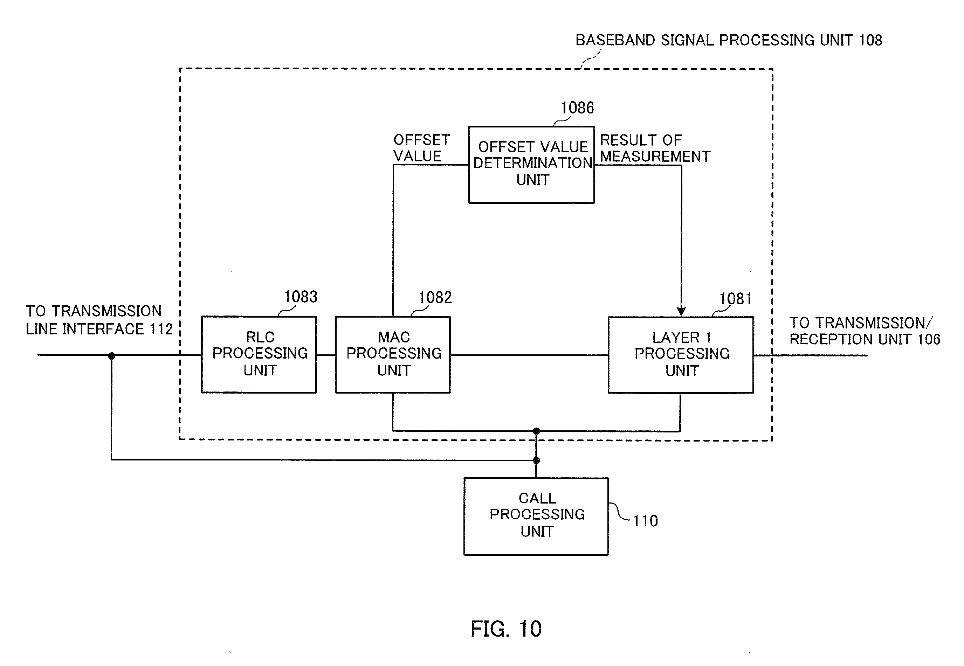

Fig. 10 is a block diagram showing a structure of a baseband signal processing unit according to Embodiment 3 in the radio base station apparatus shown in Fig. 5. The baseband signal processing unit 108 is mainly composed of a layer 1 processing unit 1081, a MAC processing unit 1082, an RLC processing unit 1083, and an offset value determination unit 1086. Note that, in Fig. 10, the similar reference numeral as Fig. 6 is attached to the similar part as Fig. 6, and the detailed explanation thereof will be omitted.

The offset value determination unit 1086 determines an offset value (bias) with respect to the measured value of the second reception quality. This offset value can be suitably set in consideration of throughput restriction etc. accompanied by a relay of data using the backhaul link. The offset value determination unit 1086 notifies the determined offset value to the mobile terminal device using Higher-layer signaling (or physical layer signaling).

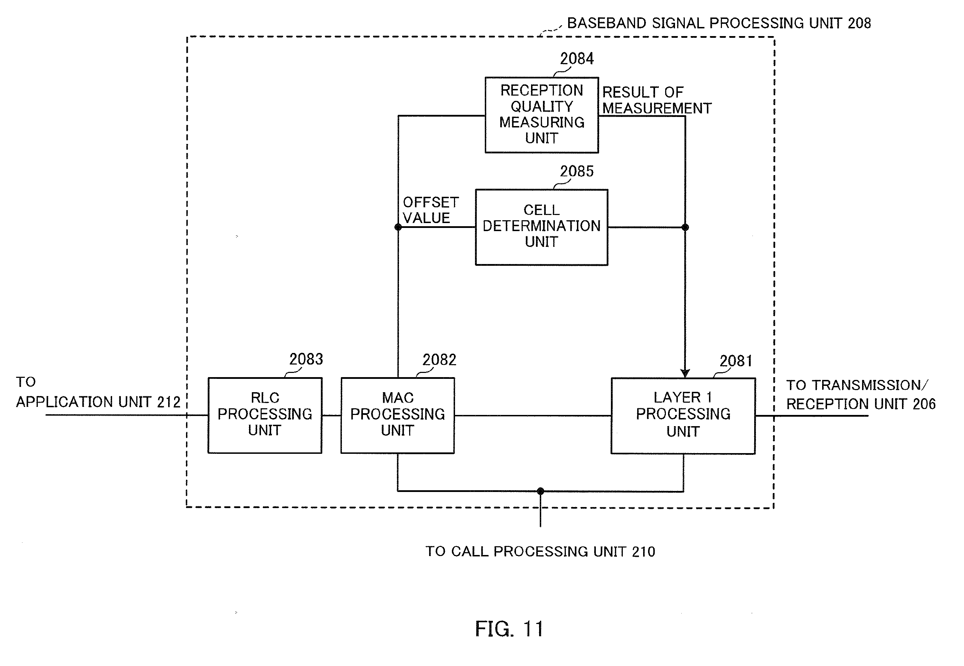

Fig. 11 is a block diagram showing a structure of a baseband signal processing unit according to Embodiment 3 in the mobile terminal device shown in Fig. 7. The baseband signal processing unit 208 is mainly composed of a layer 1 processing unit 2081, a MAC processing unit 2082, an RLC processing unit 2083, a reception quality measuring unit 2084, and a cell determination unit 2085. Note that, in Fig. 11, the similar reference numeral as Fig. 8 is attached to the similar part as Fig. 8, and the detailed explanation thereof will be omitted.

The cell determination unit 2085 selects a cell to which the mobile terminal device is connected using the measured value of the first reception quality measured using the reference signal transmitted from the radio base station apparatus, and the measured value of the second reception quality measured using the reference signal transmitted from the radio base station apparatus through the radio relay station apparatus. At this time, an offset value (bias) is added to the measured value of the second reception quality. Then, the first reception quality measured value is compared with the second reception quality measured value to which the offset value is added so as to select a satisfactory reception quality cell.

In such a structure, the offset value determination unit 1086 of the radio base station apparatus determines an offset value (cell-specific) of the second reception quality measured value measured using the reference signal transmitted from the radio base station apparatus to the mobile terminal device through the radio relay station apparatus with respect to the first reception quality measured value measured using the reference signal transmitted from the radio base station apparatus to the mobile terminal device. Subsequently, the radio base station apparatus transmits the information on this offset value to the mobile terminal device. Subsequently, the reception quality measuring unit 2084 of the mobile terminal device measures the first reception quality and the second reception quality. Subsequently, the cell determination unit 2085 selects a cell to which the mobile terminal device is connected, using the information on the measured value of the first reception quality, the measured value of the second reception quality, and the offset value. As a consequence, the mobile terminal device is connected to the radio base station apparatus or the radio relay station apparatus, in the selected cell.

Thus, in the present embodiment, since the offset value in which the throughput restriction accompanied by the relay of data using the backhaul link is reflected is added to the second reception quality measured value, the first reception quality measured value can be impartially compared with the second reception quality measured value even if the hop numbers of data transmission are different. Accordingly, optimal cell can be selected by executing the cell selection using such a reception quality measured value.

(Embodiment 4)

Also in the present embodiment, there will now be explained the case where an offset value is added to the second reception quality measured value obtained using the reference signal received through the radio relay station apparatus. In particular in the present embodiment, there will now be explained the case where the radio base station apparatus ( the radio relay station apparatus) notifies the offset value to be added to the second reception quality measured value obtained using the reference signal received through the radio relay station apparatus to the mobile terminal device, and then the mobile terminal device compares the first reception quality measured value with the second reception quality measured value to which the offset value is added to determine the cell to which the mobile terminal device is connected. As used herein, RSRP, RSRQ, etc. can be listed as the reception quality.

In the present embodiment, the radio base station apparatus (the radio relay station apparatus) notifies an offset value ($\Delta$) specific to UE (UE-specific) to each mobile terminal device using Higher-layer signaling (or physical layer signaling) (e.g., RRC). A setting method of such a terminal-specific offset value is achieved in accordance with the following expression (2):

$$\Delta_j = RSRQ_j \ [dB] - RSRQ_j^{backhaul\text{-}effected} \ [dB]$$

$$(2)$$

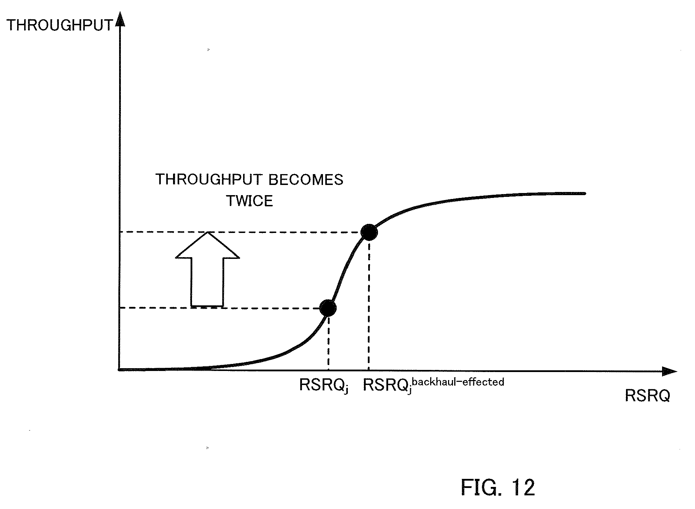

wherein $RSRQ_J^{backhaul\text{-}effected}$ is a RSRQ value of a level to which a throughput by $RSRQ_j$ will become twice, in order to compensate throughput restriction accompanied by the relay of data using the backhaul link, as shown in Fig. 12 as an example.

A structure of the baseband signal processing unit 108 of the radio base station apparatus according to the present embodiment is the same as that shown in Fig. 10, and a structure of the baseband signal processing unit 208 of the mobile terminal device according to the present embodiment is the same as that shown in Fig. 11. Note that since the offset value specific to the terminal is determined in the offset value determination unit 1086 of the baseband processing unit 108, the offset value determination unit 1086 determines the offset value for every mobile terminal device using the first reception quality measured value and the second reception quality measured value each transmitted from the mobile terminal device.

In such a structure, the reception quality measuring unit 2084 of the mobile terminal device measures the first reception quality and the second reception quality. Then, the measured value of the first reception quality and the measured value of the second reception quality are transmitted to the radio base station apparatus. Subsequently, the offset value determination unit 1086 of the radio base station apparatus determines the offset value (terminal-specific) of the second reception quality measured value with respect to the first reception quality measured value, using the measured value of the second reception quality. Subsequently, the radio base station apparatus transmits the information on this offset value to the mobile terminal device. Subsequently, the cell determination unit 2085 selects a cell to which the mobile terminal device is connected using the information on the measured value of the first reception quality, the measured value of the second reception quality, and the offset value. As a consequence, the mobile terminal device is connected to the radio base station apparatus or the radio relay station apparatus, in the selected cell.

Thus, in the present embodiment, since the offset value in which the throughput restriction accompanied by the relay of data using the backhaul link is reflected is added to the second reception quality measured value, the first reception quality measured value can be impartially compared with the second reception quality measured value even if the hop numbers of data transmission are different. Accordingly, optimal cell can be selected by executing the cell selection using such a reception quality measured value.

**(Embodiment 5)**

In the above-mentioned Embodiments 2-4, as the information on the offset value notified from the radio base station apparatus (or the radio relay station apparatus) to the mobile terminal device, an absolute value of the offset value may be used, or a difference value (error difference) between an offset value transmitted immediately before and an current offset value may be used.

When an absolute value of the offset value is transmitted from the radio base station apparatus (or the radio relay station apparatus) to the mobile terminal device as the information on the offset value, the absolute value of the offset value is notified with each of notifying timing. On the other hand, when a difference value (error difference) between an offset value transmitted immediately before and an current offset value as the information on the offset value is transmitted from the radio base station apparatus (or the radio relay station apparatus) to the mobile terminal device, the difference value (error difference) between the offset value at the previous notifying timing and the offset value at the current notifying timing is notified using Higher-layer signaling (or physical layer signaling), with each of the notifying timing.

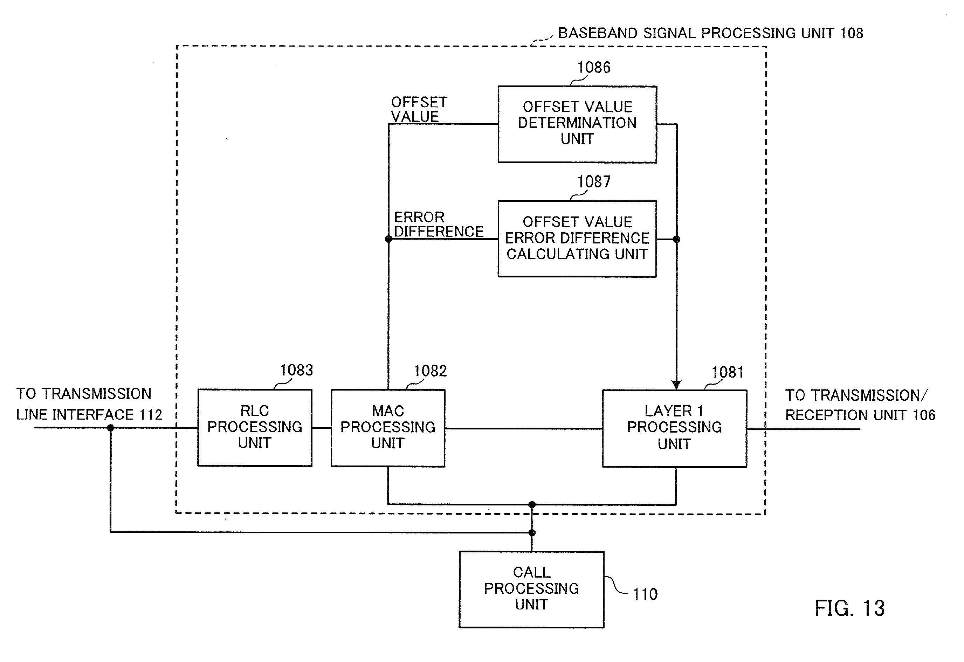

Fig. 13 is a block diagram showing a structure of a baseband signal processing unit according to Embodiment 5 in the radio base station apparatus shown in Fig. 5. The baseband signal processing unit 108 is mainly composed of a layer 1 processing unit 1081, a MAC processing unit 1082, an RLC processing unit 1083, an offset value determination unit 1086, and an offset value error difference calculating unit 1087. Note that, in Fig. 13, the similar reference numeral as Fig. 10 is attached to the similar part as Fig. 10, and the detailed explanation thereof will be omitted.

The offset value error difference calculating unit 1087 buffers an offset value notified immediately before (the offset value at the previous notifying timing), and calculates difference between the offset value ($\Delta_{t-1}$) notified immediately before and the offset value ($\Delta_t$) currently notified (the offset value calculated in the offset value determination unit 1086 based on the first reception quality measured value and the second reception quality measured value) so as to calculate error difference therebetween ($\Delta_t - \Delta_{t-1}$). The offset value error difference calculating unit 1087 notifies this error difference information to the mobile terminal device.

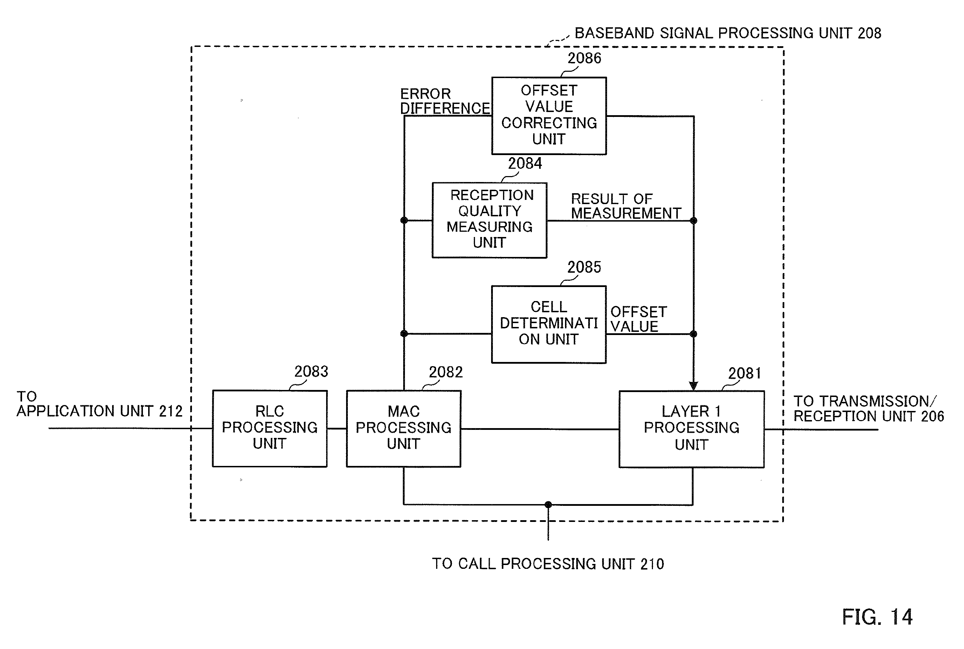

Fig. 14 is a block diagram showing a structure of a baseband signal processing unit according to Embodiment 5 in the mobile terminal device shown in Fig. 7. The baseband signal processing unit 208 is mainly composed of a layer 1 processing unit 2081, a MAC processing unit 2082, an RLC processing unit 2083, a reception quality measuring unit 2084, a cell determination unit 2085, and an offset value correcting unit 2086. Note that, in Fig. 14, the similar reference numeral as Fig. 11 is attached to the similar part as Fig. 11, and the detailed explanation thereof will be omitted.

The offset value correcting unit 2086 buffers the offset value notified immediately before (offset value at the previous notifying timing), and calculates a current offset value ($\Delta_t$) using information on error difference ($\Delta_t - \Delta_{t-1}$) between the buffered offset value ($\Delta_{t-1}$) and an offset value notified from the radio base station apparatus (or the radio relay station apparatus). The offset value correcting unit 2086 outputs the current offset value ($\Delta_t$) to the cell determination unit 2085.

The cell determination unit 2085 selects a cell to which the mobile terminal device is connected using the measured value of the first reception quality, and the measured value of the second reception quality. At this time, an offset value (bias) is added to the measured value of the second reception quality. Then, the first reception quality measured value is compared with the second reception quality measured value to which the offset value is added so as to select a satisfactory reception quality cell.

In such a structure, the reception quality measuring unit 2084 of the mobile terminal device measures the first reception quality and the second reception quality. Then, the measured value of the first reception quality and the measured value of the second reception quality are transmitted to the radio base station apparatus. Subsequently, the offset value determination unit 1086 of the radio base station apparatus determines the offset value of the second reception quality measured value with respect to the first reception quality measured value using the measured value of the first reception quality and the measured value of the second reception quality. Subsequently, the offset value error difference calculating unit 1087 calculates error difference ($\Delta_t - \Delta_{t-1}$) of the offset value, and information on the error difference is notified to the mobile terminal device. Subsequently, the offset value correcting unit 2086 of the radio base station apparatus calculates an offset value using the error difference information on the offset value. Subsequently, the cell determination unit 2085 selects a cell to which the mobile terminal device is connected, using the information on the measured value of the first reception quality, the measured value of the second reception quality, and the offset value. As a consequence, the mobile terminal device is connected to the radio base station apparatus or the radio relay station apparatus, in the selected cell.

Thus, in the present embodiment, since the offset value in which the throughput restriction accompanied by

# EP 2 557 857 A1

the relay of data using the backhaul link is reflected is added to the second reception quality measured value, the first reception quality measured value can be impartially compared with the second reception quality measured value even if the hop numbers of data transmission are different. Accordingly, optimal cell can be selected by executing the cell selection using such a reception quality measured value.

The embodiments described herein are to be considered in all respects merely as illustrative and not restrictive. The scope of the invention is indicated by the appended claims rather than the foregoing description, and all changes which come within the meaning and range of equivalents thereof are intended to be embraced therein.

Industrial applicability

The present invention is utilized for a radio base station apparatus, a mobile terminal device, and a cell selecting method, in the LTE-A system.

This application is based upon Japanese Patent Application No. 2010-087277 filled on April 5, 2010, the entire contents of which are incorporated herein by reference.

**Claims**

1. A radio base station apparatus comprising:

   a sub-frame determination section configured to determine a specified sub-frame for measuring reception quality in a mobile terminal device;
   a transmitting section configured to transmit information on the specified sub-frame; and
   a cell selection determination section configured to select a cell to which the mobile terminal device is connected using a first reception quality measured value and a second reception quality measured value, the first reception quality measured value measured using a reference signal of the specified sub-frame transmitted from the radio base station apparatus to the mobile terminal device, the second reception quality measured value measured using a reference signal of the specified sub-frame transmitted from the radio base station apparatus to the mobile terminal device through a radio relay station apparatus, wherein
   the specified sub-frame includes data, and the transmitting section is configured to transmit information on the selected cell to the mobile terminal device.

2. The radio base station apparatus according to claim 1, wherein the specified sub-frame is a normal sub-frame.

3. A radio base station apparatus comprising:

   a receiving section configured to receive a first reception quality measured value and a second reception quality measured value, the first reception quality measured value measured using a reference signal transmitted from the radio base station apparatus to a mobile terminal device, the second reception quality measured value measured using a reference signal transmitted from the radio base station apparatus to the mobile terminal device through a radio relay station apparatus;
   a cell determination section configured to determine a cell to which the mobile terminal device is connected, by adding an offset value to the second reception quality measured value and comparing the second reception quality measured value with the first reception quality measured value; and
   a transmitting section configured to transmit information on the determined cell to the mobile terminal device.

4. A radio base station apparatus comprising:

   an offset value determination section configured to determine an offset value of a second reception quality measured value with respect to a first reception quality measured value, the first reception quality measured value measured using a reference signal transmitted from the radio base station apparatus to a mobile terminal device, the second reception quality measured value measured using a reference signal transmitted from the radio base station apparatus to the mobile terminal device through a radio relay station apparatus; and
   a transmitting section configured to transmit information on the determined offset value to the mobile terminal device.

5. The radio base station apparatus according to claim 4, wherein the offset value determination section is configured to determine the offset value using the second reception quality measured value transmitted from the mobile terminal

11

device.

6.   The radio base station apparatus according to claim 4, wherein the transmitting section is configured to transmit an absolute value of the offset value as the information on the offset value.

7.   The radio base station apparatus according to claim 4, wherein the transmitting section is configured to transmit a difference value between an offset value transmitted immediately before and an offset value currently transmitted, as the information on the offset value.

8.   A mobile terminal device comprising:

   a receiving section configured to receive information on a specified sub-frame for measuring reception quality;
   a reception quality measuring section configured to measure first reception quality using a reference signal of the specified sub-frame transmitted from a radio base station apparatus, and to measure second reception quality using a reference signal of the specified sub-frame transmitted from the radio base station apparatus through a radio relay station apparatus; and
   a transmitting section configured to transmit the measured value of the first reception quality and the measured value of the second reception quality to the radio base station apparatus.

9.   A mobile terminal device comprising:

   a reception quality measuring section configured to measure first reception quality using a reference signal transmitted from a radio base station apparatus, and to measure second reception quality using a reference signal transmitted from the radio base station apparatus through a radio relay station apparatus; and
   a cell determination section configured to select a cell to which the mobile terminal device is connected, using information on an offset value of the measured value of the second reception quality with respect to the measured value of the first reception quality, the offset value notified from the radio base station apparatus.

10.   The mobile terminal device according to claim 9, wherein the information on the offset value is an absolute value of the offset value.

11.   The mobile terminal device according to claim 9, wherein the information on the offset value is a difference value between an offset value transmitted immediately before and an offset value currently transmitted.

12.   A cell selecting method comprising the steps of:

   in a radio base station apparatus, determining a specified sub-frame including data for measuring reception quality in a mobile terminal device, and transmitting information on the specified sub-frame;
   in the mobile terminal device, receiving the information on the specified sub-frame, measuring first reception quality using a reference signal of the specified sub-frame transmitted from the radio base station apparatus, while measuring second reception quality using a reference signal of the specified sub-frame transmitted from the radio base station apparatus through a radio relay station apparatus, and transmitting the measured value of the first reception quality and the measured value of the second reception quality to the radio base station apparatus; and
   in the radio base station apparatus, selecting a cell to which the mobile terminal device is connected using the measured value of the first reception quality and the measured value of the second reception quality, and transmitting information on the selected cell to the mobile terminal device.

13.   A cell selecting method comprising:

   in a mobile terminal device, measuring first reception quality using a reference signal transmitted from a radio base station apparatus to the mobile terminal device, while measuring second reception quality using a reference signal transmitted from the radio base station apparatus to the mobile terminal device through a radio relay station apparatus, and transmitting the measured value of the first reception quality and the measured value of the second reception quality to the radio base station apparatus; and
   in the radio base station apparatus, determining a cell to which the mobile terminal device is connected, by adding an offset value to the second reception quality measured value and comparing the second reception quality measured value with the first reception quality measured value, and transmitting information on the

EP 2 557 857 A1

determined cell to the mobile terminal device.

14. A cell selecting method comprising:

in a radio base station apparatus, determining an offset value of a second reception quality measured value measured using a reference signal transmitted from the radio base station apparatus to a mobile terminal device through a radio relay station apparatus with respect to a first reception quality measured value measured using a reference signal transmitted from the radio base station apparatus to the mobile terminal device, and transmitting information on the determined offset value to the mobile terminal device; and

in the mobile terminal device, measuring the first reception quality and measuring the second reception quality, and selecting a cell to which the mobile terminal device is connected, using the information on the measured value of the first reception quality, the measured value of the second reception quality, and the offset value.

13

BACKHAUL LINK (Un)　　　　　　　ACCESS LINK (Uu)

FIG. 1

eNB TRANSMISSION (RELAY RECEPTION)

f1

TTI

f1

t

RELAY TRANSMISSION (UE RECEPTION)

FIG. 2

CRS

MACRO eNB

t

Ctrl

MACRO eNB → MACRO UE

R-PDCCH

MACRO eNB → RELAY NODE

Ctrl

MACRO eNB → MACRO UE

CONTROL SIGNAL

RELAY NODE

t

Ctrl

Ctrl

RELAY NODE → RELAY UE

BACKHAUL (MBSFN) SUB-FRAME

NORMAL SUB-FRAME

FIG. 3

BACKHAUL LINK

eNB

measurement$_1$

measurement$_2$

RN

UE

FIG. 4

EP 2 557 857 A1

eNB (RN)
100

TO ACCESS
GATEWAY UNIT

| 112 | 108 | 106 | 104 |
|---|---|---|---|
| TRANSMISSION LINE INTERFACE | BASEBAND SIGNAL PROCESSING UNIT | TRANSMISSION/ RECEPTION UNIT | AMPLIFIER UNIT |

~102

110

CALL PROCESSING UNIT

FIG. 5

FIG. 6

FIG. 7

EP 2 557 857 A1

BASEBAND SIGNAL PROCESSING UNIT 208

2084

SUB-FRAME INFORMATION | RECEPTION QUALITY MEASURING UNIT | RESULT OF MEASUREMENT

2083 | 2082 | 2081

TO APPLICATION UNIT 212 | RLC PROCESSING UNIT | MAC PROCESSING UNIT | LAYER 1 PROCESSING UNIT | TO TRANSMISSION/ RECEPTION UNIT 206

TO CALL PROCESSING UNIT 210

FIG. 8

FIG. 9

BASEBAND SIGNAL PROCESSING UNIT 108

1086 OFFSET VALUE DETERMINATION UNIT

RESULT OF MEASUREMENT

OFFSET VALUE

1081 LAYER 1 PROCESSING UNIT

1082 MAC PROCESSING UNIT

1083 RLC PROCESSING UNIT

110 CALL PROCESSING UNIT

TO TRANSMISSION/ RECEPTION UNIT 106

TO TRANSMISSION LINE INTERFACE 112

FIG. 10

FIG. 11

EP 2 557 857 A1

THROUGHPUT

THROUGHPUT BECOMES
TWICE

RSRQ$_j$   RSRQ$_j^{\text{backhaul-effected}}$

RSRQ

FIG. 12

EP 2 557 857 A1

BASEBAND SIGNAL PROCESSING UNIT 108

1086

OFFSET
VALUE

OFFSET VALUE
DETERMINATION
UNIT

1087

ERROR
DIFFERENCE

OFFSET VALUE
ERROR DIFFERENCE
CALCULATING UNIT

1083

TO TRANSMISSION
LINE INTERFACE 112

RLC
PROCESSING
UNIT

1082

MAC
PROCESSING
UNIT

1081

LAYER 1
PROCESSING
UNIT

TO TRANSMISSION/
RECEPTION UNIT 106

CALL
PROCESSING
UNIT

110

FIG. 13

FIG. 14

BASEBAND SIGNAL PROCESSING UNIT 208

2086 OFFSET VALUE CORRECTING UNIT

ERROR DIFFERENCE

2084 RECEPTION QUALITY MEASURING UNIT

RESULT OF MEASUREMENT

2085 CELL DETERMINATION UNIT

OFFSET VALUE

2083 RLC PROCESSING UNIT

TO APPLICATION UNIT 212

2082 MAC PROCESSING UNIT

2081 LAYER 1 PROCESSING UNIT

TO TRANSMISSION/ RECEPTION UNIT 206

TO CALL PROCESSING UNIT 210

EP 2 557 857 A1

## INTERNATIONAL SEARCH REPORT

| | International application No. |
|---|---|
| | PCT/JP2011/057962 |

**A. CLASSIFICATION OF SUBJECT MATTER**

*H04W48/16*(2009.01)i, *H04W16/26*(2009.01)i, *H04W24/10*(2009.01)i, *H04W48/20* (2009.01)i

According to International Patent Classification (IPC) or to both national classification and IPC

**B. FIELDS SEARCHED**

Minimum documentation searched (classification system followed by classification symbols)
H04B7/24-7/26, H04W4/00-99/00

Documentation searched other than minimum documentation to the extent that such documents are included in the fields searched

| Jitsuyo Shinan Koho | 1922-1996 | Jitsuyo Shinan Toroku Koho | 1996-2011 |
|---|---|---|---|
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2008-048202 A (Fujitsu Ltd.), 28 February 2008 (28.02.2008), paragraphs [0030] to [0101] & US 2008/045147 A1  & EP 1890405 A2 & CN 101128008 A  & KR 2008016454 A & TW 200812277 A | 1-14 |
| Y | LTE signaling to support Relay operation, 3GPP TSG RAN WG1 Meeting #55, R1-084412, 2008.11, pp.1-6 | 1-14 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 13 May, 2011 (13.05.11) | 24 May, 2011 (24.05.11) |

| Name and mailing address of the ISA/<br>Japanese Patent Office | Authorized officer |
|---|---|
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010087277 A